# EUROPÄISCHE PATENTSCHRIFT

(11) **EP 0 971 598 B1**
(45) Veröffentlichungstag und Bekanntmachung des Hinweises auf die Patenterteilung: **29.11.2000**
(21) Anmeldenummer: 97937515.1
(22) Anmeldetag: 23.07.1997
(51) Int. Cl.: A23G 9/02, A23G 9/24

(54) **SPEISEEIS MIT FETTHALTIGEM ÜBERZUG**
ICE CREAM WITH FAT-CONTAINING COATING
GLACE ALIMENTAIRE SOUS ENROBAGE CONTENANT DES MATIERES GRASSES

(30) Priorität: 27.03.1997 DE 19713191
(43) Veröffentlichungstag der Anmeldung: 19.01.2000
(73) Patentinhaber: Schöller Lebensmittel GmbH & Co. KG, D-90419 Nürnberg (DE)
(72) Erfinder: BEER, Richard, D-90451 Nürnberg (DE)
(74) Vertreter: Körber, Wolfhart, Dr.
(86) Internationale Anmeldenummer: EP9703995
(87) Internationale Veröffentlichungsnummer: WO9843491

(56) Entgegenhaltungen:
- EP-A- 0 322 952
- EP-A- 0 500 940
- EP-A- 0 560 053
- WO-A-95/20883
- DE-C- 848 736
- PATENT ABSTRACTS OF JAPAN vol. 096, no. 009, 30.September 1996 & JP 08 126476 A (MORINAGA), 21.Mai 1996,
- PATENT ABSTRACTS OF JAPAN vol. 10, no. 219 (C-363), 31.Juli 1986 & JP 61 056045 A (MEIJI MILK PROD.), 20.März 1986,
- PATENT ABSTRACTS OF JAPAN vol. 95, no. 9, 31.Oktober 1995 & JP 07 163301 A (MEIJI MILK PROD.), 27.Juni 1995,

## Beschreibung

Die vorliegende Erfindung betrifft ein Verfahren zur Herstellung von Zweikomponenten-Speiseeisprodukten, bei denen ein gefrorener Kern aus Speiseeis von einem fetthaltigen Überzug umgeben ist. Die Erfindung betrifft weiterhin mit dem erfindungsgemäßen Verfahren erhältliche Zweikomponenten-Speiseeisprodukte.

### Hintergrund der Erfindung

Zwei- oder Mehrkomponenten-Speiseeisprodukte, bei denen ein Kern aus Speiseeis von einer weiteren, von der Zusammensetzung des Kerns verschiedenen Eis-Schicht umgeben ist, sind im Stand der Technik allgemein bekannt und seit mehreren Jahren im Handel erhältlich. Zur Herstellung von Zweikomponenten-Speiseeis mit beispielsweise einem inneren Milcheis-Kern und einer äußeren Wassereis-Schicht wird eine Wassereis-Lösung in eine auf tiefe Temperaturen gekühlte Gießform gefüllt, wobei sich auf den inneren Oberflächen der Gießform eine dünne, feste Wassereis-Schicht bildet. Nach Abpumpen des sich noch im flüssigen Zustand befindlichen Restes der Wassereis-Lösung kann in die nun auf den Innenseiten mit einer Wassereis-Schicht beschichtete Gießform ein anderes Material, beispielsweise Milcheis, eingebracht werden, worauf die Gießform erneut gekühlt wird. Zur Entnahme des Endproduktes mußte die Gießform anschließend leicht angewärmt werden, damit das Zweikomponenten-Speiseeis ohne Beschädigung aus der Gießform herausgezogen werden kann. Dieses Verfahren ergibt jedoch Produkte, bei denen die äußere gefrorene Wassereis-Schicht sehr große Eiskristalle aufweist, hart und spröde ist und beim Verzehr in kleine Teile zerbricht.

Da dieses Verfahren zudem relativ aufwendig und kompliziert ist wurde zur Herstellung von Zweikomponenten-Speiseeisprodukten vermehrt das sogenannte Tauchverfahren eingesetzt, bei dem ein auf eine bestimmte Temperatur vorgekühlter Kern aus Speiseeis in eine Wassereis-Lösung getaucht wird, wobei sich aufgrund der tiefen Temperatur des Kerns an dessen Oberfläche eine Wassereis-Schicht bildet. Die Wassereis-Lösung kann vorab mit Aufschlag versehen werden, was die Bildung kleiner Wassereis-Kristalle begünstigt, wodurch ein sandiger Geschmack in dem Endprodukt vermieden wird.

Die EP 0 710 074 lehrt beispielsweise die Herstellung eines kombinierten Eis am Stiel, das aus einem Kern aus Milcheis und einem Wassereis-Überzug besteht. Das Speiseeis wird durch Tauchen des auf unter -15°C abgekühlten Kerns in eine Wassereis-Lösung hergestellt, wobei sich während des Tauchvorgangs eine Wassereis-Schicht auf dem Kern bildet. Der mit dem Wassereis überzogene Kern wird anschließend erneut abgekühlt, beispielsweise durch Eintauchen in eine kryogene Flüssigkeit, um eine bessere Haftung der Wassereis-Schicht auf dem Milcheis-Kern zu gewährleisten und die Kristalle in der Überzugs-Lösung klein zu halten.

In der Japanischen Offenlegungsschrift Kokai 61(86)-56045 wird die Herstellung eines mehrschichtigen Speiseeises mit starkem Aufschlag im Überzug offenbart, bei dem ein aus beispielsweise Milcheis oder Sorbet bestehender Kern in eine wäßrige Sol-Lösung getaucht wird. Die Sol-Lösung wird durch Auflösen von 30 - 50 % Zuckerfeststoffen, 3 - 6 % Gelatine und 1 % Albumin erhalten und zur Stabilisierung der in den Überzug einzubringenden Luftblasen (Aufschlag) mit 0,3 % Zuckerestern versehen.

Die US-A-2,985,263 beschreibt weiterhin ein Verfahren zum Beschichten eines gefrorenen Eisproduktes mit einer wäßrigen Überzugs-Lösung, die zur Sicherstellung des Anhaftens der wäßrigen Überzugs-Lösung an den Kern ein Alkalimetallalginat enthält.

In der DE 848 736 ist ein Speiseeiskörper mit einem Schokoladenüberzug beschrieben, welcher durch Einbringen von unzähligen vielen Luftbläschen eine schaumige Konsistenz hat.

In der EP-A-0 560 053 ist ein Speiseeis mit einem fetthaltigen Überzug und ein Verfahren zu dessen Herstellung beschrieben, wobei die Oberfläche eines gefrorenen Kerns aus Speiseeis in eine fetthaltige Überzugslösung getaucht wird. Der relativ hohe Fettgehalt der Überzugslösung und die hohe Temperatur der Überzugslösung führen zu einem relativ spröden Überzug auf dem fertigen Produkt.

Aufgabe der vorliegenden Erfindung ist daher, ein Speiseeis mit fetthaltigem Überzug und ein Verfahren zu dessen Herstellung zur Verfügung zu stellen, bei dem der Überzug nicht hart ist und beim Verzehr nicht zerspringt und eine weiche und cremig empfundene Konsistenz aufweist.

Die Aufgabe wird durch ein Verfahren gelöst, bei dem die Oberfläche eines gefrorenen Kerns aus Speiseeis auf eine Temperatur von unter mindestens -15 °C gebracht wird, die Oberfläche des Kerns für eine ausreichende Zeitspanne in eine fetthaltige Eis-Lösung getaucht wird, um eine Menge der Lösung als Schicht auf dem Kern zu bilden, wobei die Überzugs-Lösung beim Tauchen des Kerns eine Temperatur zwischen 0°C und 20°C hat und ihr Fettgehalt zwischen 10% und 18% liegt und die erhaltene Schicht einen Aufschlag zwischen 0 und 30 %, bezogen auf das Volumen der Überzugs-Lösung, aufweist, und anschließend das Ganze wieder auf eine Oberflächentemperarur von unter mindestens -15 °C gekühlt wird, um die fetthaltige Schicht auf dem gefrorenen Eiskern aus Speiseeis auszuhärten.

Die Aufgabe wird in einer zweiten Ausführungsform weiter durch ein Verfahren gelöst, bei dem die Oberflächentemperatur eines gefrorenen Kerns aus Speiseeis auf eine Temperarur von unter mindestens -40 °C gebracht wird, die Oberfläche des Kerns für eine ausreichende Zeitspanne in eine fetthaltige Eis-Lösung getaucht wird, um eine Menge der Lösung als Schicht auf dem Kern zu bilden, wobei die Überzugs-Lösung beim Tauchen des Kerns eine Temperatur zwischen 0°C und 20°C hat und ihr Fettgehalt zwischen 10% und 18% liegt und die erhaltene Schicht einen Aufschlag zwischen 0 und 30 %, bezogen auf das Volumen der Überzugs-Lösung aufweist, wobei die Überzugs-Schicht des so erhaltenen Produktes mindestens Lagertemperatur oder tiefer aufweist.

### Ausführliche Beschreibung der Erfindung

Die Herstellung des Eis-Kerns erfolgt mittels im Stand der Technik bekannter Verfahren, wie beispielsweise Extrusion oder Herstellung in Gießformen. Der Kern kann aus herkömmlichem Speiseeis bestehen und alle gewöhnlich bei dessen Herstellung eingesetzten Proteine enthalten, wie Milchproteine und Proteine pflanzlicher Herkunft. Der Kern kann darüber hinaus mit Aufschlag versehen sein oder nicht.

Die Oberfläche des Kerns wird vor dem Tauchvorgang auf eine Temperatur von unter -15 °C gebracht, wobei eine Temperatur im Bereich von -15 °C bis -60 °C bevorzugt ist, vorzugsweise -30°C bis -60 °C. Die gewünschte Kern-Temperatur kann durch unterschiedlich langes Eintauchen in eine kryogene Flüssigkeit, beispielsweise Stickstoff oder Kohlensäure, erreicht werden, wobei sich beispielsweise für flüssigen Stickstoff Tauchzeiten von 7 bis 35 Sekunden, vorzugsweise 12 bis 18 Sekunden, als geeignet erwiesen haben.

Der gekühlte Kern wird anschließend in die Überzugs-Lösung getaucht, die einen Fettgehalt von 10 bis 18 % aufweist. Ein Fettgehalt von 15 % bis 18 % hat sich als für die Zwecke der Erfindung sehr geeignet erwiesen.

Als Fettkomponente der Überzugs-Lösung kann jedes bekannte und bei der Eisproduktion einsetzbare Fett verwendet werden, wie tierisches Fett, beispielsweise Milchfett, oder pflanzliches Fett, wie beispielsweise Kokosfett, Kakaofett, Palmöl, Sojaöl, Palmkernöl oder Rapsöl, oder eine Kombination tierischer und pflanzlicher Fette.

Die für die Fettkomponente bevorzugt zu verwendende Milch kann in jeder bekannten Form mit unterschiedlichem Fettgehalt eingesetzt werden, wobei sich insbesondere flüssige Milch, Sahne, konzentrierte Milch, Milchpulver, eingedicktes Magermilchpulver, Sauerrahm, Joghurt, Quark, Buttermilch oder Kefir als geeignet erwiesen haben.

Die Proteine in der Überzugs-Lösung können ebenfalls tierischen oder auch pflanzlichen Ursprungs sein, wobei sich im Hinblick auf die Fettquelle ebenfalls insbesondere Milch als Proteinquelle anbietet.

Die Überzugs-Lösung kann nach bekannten technischen Verfahren mit Luft aufgeschlagen werden, wobei ein Aufschlag in der Überzugs-Lösung bis zu 30 % möglich ist, vorzugsweise bis zu 20 %. Mehr bevorzugt ist ein Aufschlag im Bereich von 0 bis 10 %, jeweils bezogen auf das Volumen der Überzugs-Lösung, wobei der Aufschlag auch ganz fehlen kann, ohne die organoleptischen Eigenschaften des Endproduktes negativ zu beeinflussen.

Es wurde nun überraschenderweise gefunden, daß sich durch das erfindungsgemäße Verfahren auch bei den angegebenen geringen Mengen Aufschlag in den fetthaltigen Überzügen ein gleichmäßiger, glatter und cremiger Überzug erreichen läßt.

Die Temperatur der Überzugs-Lösung während des Eintauchens des Eiskerns darin liegt gewöhnlich im Bereich von 0° bis 20 °C, wobei im Hinblick auf deren Lagerstabilität ein Temperaturbereich von 0° bis 10 °C bevorzugt ist. Die Temperatur der Überzugs-Lösung wird während des Verfahrens unter Berücksichtigung der Temperatur des einzutauchenden Eiskerns gewählt, so daß während des Tauchvorgangs ein schnelles Anhaften der Überzugs-Lösung an den eingetauchten Eiskern erfolgt. Dabei hat sich ein Temperaturbereich von 2° bis 4 °C als sehr geeignet erwiesen.

Wird gemäß der zweiten erfindungsgemäßen Ausführungsform die Temperatur der Oberfläche des Speiseeis-Kerns unter mindestens -40 °C gebracht, dann wird beim Eintauchen des gefrorenen Eiskerns in die Überzugs-Lösung durch den durch den Temperaturunterschied zwischen Eiskern und Überzugs-Lösung hervorgerufenen Temperaturschock ein schnelles Anhaften der Überzugs-Lösung an den Kern bewirkt, wobei sich in der Überzugs-Schicht nur äußerst kleine Eiskristalle ausbilden. Bei dieser Ausführungsform wird daher die Temperatur der Überzugs-Lösung derart gewählt, daß ein ausreichend großer Temperaturunterschied zwischen der Oberflächentemperatur und der Temperatur der Überzugs-Lösung bereitgestellt wird, wobei der Fachmann aufgrund seines allgemeinen Fachwissens die Temperatur des Eiskerns und die der Überzugs-Lösung entsprechend wählt. Bevorzugte Temperaturen für die Oberfläche des Eiskerns liegen unter -60 °C. Die Temperatur der Überzugs-Lösung kann auch bei dieser Ausführungsform der Erfindung in dem oben angegebenen Bereich liegen, wobei sich jedoch aufgrund der Lagerstabilität von fetthaltigen Lösungen und des erwünschten hohen Temperaturschocks ein Bereich von 2 bis 4 °C als sehr zweckmäßig erwiesen hat.

Die Eintauchdauer des Speiseeis-Kerns in die Überzugs-Lösung wird hauptsächlich von der Temperatur des Eiskerns sowie von der Temperatur und dem Fettgehalt der Überzugs-Lösung bestimmt. Sie beträgt jedoch gewöhnlich 0,5 bis 20 Sekunden und wird vom Fachmann aufgrund seines Fachwissens entsprechend gewählt, so daß die erfindungsgemäß erzielten Wirkungen erhalten werden und eine Schicht der Überzugs-Lösung ausgebildet werden kann. Die Tauchvorgänge können beliebig wiederholt werden, bis die gewünschte Schichtdicke erreicht ist. Dabei können auch unterschiedliche Überzugs-Lösungen verwendet werden, wobei Speiseeisprodukte mit unterschiedlichen Überzügen in einem Produkt erhalten werden können.

Die Überzugs-Lösung kann zudem weitere im Stand der Technik bekannte Inhaltsstoffe, wie Zucker- und Zuckerarten gemäß der Zuckerartenverordnung, Stabilisatoren, wie Johannisbrotkernmehl, Guar, Alginat von 0,1 - 0,3 % und Emulgatoren, beispielsweise Mono- und Diglyceride enthalten. Zur Geschmacksgebung können nach Wunsch bekannte Aromastoffe, aber auch stückige Zutaten, wie Fruchtstücke, Nüsse, Schoko-Raspeln, Vanilleschote, Kaffee und Cerealien zugesetzt werden.

Nach Entnahme aus der Überzugs-Lösung wird gemäß der ersten erfindungsgemäßen Ausführungsform der nun mit einer Schicht der Überzugs-Lösung beschichtete Kern erneut auf eine Temperatur abgekühlt, die in dem für die anfängliche Kühlung der Kernoberfläche beschriebenen Bereich fällt. Dadurch wird ein verstärktes Anhaften der Überzugsschicht an den Eis-Kern gewährleistet und es erfolgt ein Härten. Die Kristallgröße in der Überzugsschicht wird dadurch klein gehalten.

Bei der zweiten Ausführungsform der vorliegenden Erfindung ist dieser erneute Abkühlschritt nicht erforderlich. Wichtig dabei ist jedoch, daß die Temperatur der Überzugs-Schicht nach Entnahme aus der Überzugs-Lösung bei annähernd Lagertemperatur liegt, d.h. zwischen -18 bis -28 °C. Durch den großen Temperaturunterschied zwischen dem Eis-Kern und der Überzugslösung ist Kältekapazität des Eiskerns derart hoch, daß eine schnelle Bildung und ein sofortiges Anhaften kleiner Kristalle an den Eiskern bewirkt wird. Da die Überzugsschicht nach Entnahme aus der Überzugs-Lösung erfindungsgemäß höchstens Lagertemperatur aufweisen soll, wird ein weiteres Kristallwachstum in der Überzugsschicht vermieden.

Erfindungsgemäß können die Verfahrensschritte sowohl nach der ersten Ausführungsform als auch nach der zweiten Ausführungsform mehrfach mit unterschiedlichen Temperatur-Parametern wiederholt werden, um mehrere Überzugsschichten übereinander zu bilden oder die gewünschte Schichtdicke zu erhöhen. Auch ist es möglich, durch mehrfache Wiederholung der Verfahrensschritte Schichten aus unterschiedlichen Überzugslösungen übereinander zu erzeugen. Schließlich ist es möglich, die Verfahrensschritte nach der ersten und der zweiten Ausführungsform derart zu kombinieren, daß beispielsweise zunächst ein oder mehrere Überzugsschichten nach dem Verfahren der zweiten Ausführungsform erzeugt werden und anschließend eine letzte oberste Überzugsschicht nach dem Verfahren der ersten Ausführungsform mit gleicher oder gegenüber den vorhergehenden Schichten unterschiedlicher Überzugslösung gebildet wird.

Die folgenden Beispiele erläutern die Erfindung, ohne diese zu beschränken. In den Beispielen werden beispielhafte Zusammensetzungen gezeigt, die als Überzugs-Lösungen eingesetzt wurden.

### Beispiel 1

Ein Kern aus Speiseeis wird in bekannter Weise extrudiert und ein Stiel wird in den Kern eingebracht. Der Eiskern wird in einen Härtetunnel überführt und auf eine Temperatur von -22 °C gebracht. Anschließend wird das so vorgekühlte Speiseeisprodukt für 15 Sekunden in flüssigen Stickstoff getaucht, wobei eine Oberflächentemperatur von unter -40°C erhalten wurde. Das Speiseeis wurde anschließend für 7 Sekunden in eine Überzugs-Lösung getaucht, die folgende Zusammensetzung aufwies.

| **Rohstoffe** | **Gewicht %** |
|---|---|
| Glucosesirup | 5,00 |
| Wasser | 24,50 |
| Sahne 36% | 50,00 |
| Magermilchkonzentrat | 10,00 |
| Zucker | 10,00 |
| Emulgator | 0,30 |
| Johannisbrotkernmehl | 0,10 |
| Aroma : Vanille | 0,10 |
| | |
| **GESAMT:** | **100,00** |

Das Speiseeisprodukt wurde danach aus der Überzugs-Lösung entnommen und erneut für 14 Sekunden in flüssigen Stickstoff getaucht. Das Produkt wurde anschließend in herkömmlicher Art und Weise verpackt und gelagert.

Das so hergestellte Zweikomponenten-Speiseeisprodukt wies eine glatte und cremige Oberfläche auf. Durch die cremige Konsistenz der Überzugs-Schicht kam überraschenderweise der Geschmack des Speiseeis-Kerns verstärkt zur Geltung.

### Beispiel 2

Das Verfahren aus Beispiel 1 wurde wiederholt, mit der Maßgabe, daß die Eintauchzeiten in den flüssigen Stickstoff bei 18 Sekunden lagen. Die Tauchzeit in die Überzugs-Lösung betrug 7 Sekunden. Als Überzugs-Lösung wurde die folgende Lösung eingesetzt:

| **Pflanzenfett - Schoko** | |
|---|---|
| **Rohstoffe** | **Gewicht %** |
| Glucosesirup | 4,00 |
| Wasser | 39,50 |
| Kokosfett | 15,00 |
| Magermilchkonzentrat | 22,00 |
| Zucker | 12,00 |
| Dextrose | 3,00 |
| Stabilisator Johannisbrotkernmehl | 0,20 |
| Emulgator | 0,30 |
| Kakao 10/12 | 2,00 |
| Kakao 20/22 | 2,00 |
| | |
| **GESAMT:** | **100,00** |

Das so hergestellte Zweikomponenten-Speiseeisprodukt wies ebenfalls eine glatte und cremige Oberfläche auf. Auch hier zeigte sich, daß durch die cremige Konsistenz der Überzugs-Schicht der Geschmack des Speiseeis-Kerns verstärkt zur Geltung kam.

### Beispiel 3

Das Verfahren aus Beispiel 1 wurde wiederholt, wobei die Bedingungen wie in diesem Beispiel erläutert blieben. Als Überzugs-Lösung wurde die folgende Lösung eingesetzt:

| **Joghurt - Eis** | |
|---|---|
| **Rohstoffe** | **Gewicht %** |
| Glucosesirup | 4,00 |
| Wasser | 19,40 |
| Butterfett | 15,00 |
| Magermilchkonzentrat | 11,00 |
| Zucker | 12,00 |
| Dextrose | 3,00 |
| Stabilisator Johannisbrotkernmehl | 0,10 |
| Emulgator | 0,30 |
| Joghurt | 35,00 |
| Aroma : Jogurth | 0,20 |
| | |
| **GESAMT:** | **100,00** |

Das mit dieser Überzugs-Lösung hergestellte Zweikomponenten-Speiseeisprodukt wies eine glatte und cremige Oberfläche auf. Auch hier wurde durch Verkostung festgestellt, daß durch die cremige Konsistenz der Überzugs-Schicht der Geschmack des Speiseeis-Kerns verstärkt zur Geltung kam.

### Beispiel 4

Ein Zweikomponenten-Speiseeis wurde anhand der zweiten erfindungsgemäßen Ausführungsform hergestellt. Dabei wurde das wie in Beispiel 1 erhaltene Speiseeis für 20 Sekunden in jeweils eine Überzugs-Lösung gemäß den Beispielen 1 - 3 getaucht (Tauchzeit 5 Sekunden), wobei das so erhaltene Produkt anschließend sofort in eine Zone mit Lagertemperatur überführt wurde.

Die so erhaltenen Zweikomponenten-Speiseeisprodukte wiesen allesamt glatte und cremige Oberflächen auf und der Geschmack des Speiseeis-Kerns kam verstärkt zur Geltung.

## Patentansprüche

1. Verfahren zur Herstellung eines Zweikomponenten-Speiseeis, bei dem
die Oberfläche eines gefrorenen Kerns aus Speiseeis auf eine Temperatur von unter mindestens -15°C gebracht wird,
die Oberfläche des Kerns für eine ausreichende Zeitspanne in eine Überzugs-Lösung getaucht wird, um eine Menge der Lösung als Schicht auf dem Kern zu bilden, anschließend das Ganze wieder auf eine Oberflächentemperatur von unter mindestens -15°C gekühlt wird, um die Schicht auf dem gefrorenen Eiskern aus Speiseeis auszuhärten,
**dadurch gekennzeichnet**,
daß die Überzugs-Lösung beim Tauchen des Kerns eine Temperatur zwischen 0°C und 20°C hat und ihr Fettgehalt zwischen 10% und 18% liegt und die erhaltene Schicht einen Aufschlag zwischen 0 und 30%, bezogen auf das Volumen der Überzugs-Lösung, aufweist.

2. Verfahren zur Herstellung eines Zweikomponenten-Speiseeis, bei dem
die Oberfläche eines gefrorenen Kerns aus Speiseeis auf eine Temperatur von unter mindestens -40°C gebracht wird,
die Oberfläche des Kerns für eine ausreichende Zeitspanne in eine Überzugs-Lösung getaucht wird, um eine Menge der Lösung als Schicht auf dem Kern zu bilden,
**dadurch gekennzeichnet**,
daß die Überzugs-Lösung beim Tauchen des Kerns eine Temperatur zwischen 0°C und 20°C hat und ihr Fettgehalt zwischen 10% und 18% liegt und die erhaltene Schicht einen Aufschlag zwischen 0 und 30%, bezogen auf das Volumen der Überzugs-Lösung, aufweist,
und die Bildung der Schicht so geführt wird, daß die Überzugsschicht des so erhaltenen Speiseeis-Produktes nach dem Eintauchen mindestens Lagertemperatur oder tiefer aufweist.

3. Verfahren nach Anspruch 1 oder Anspruch 2, bei dem der Aufschlag 0 - 10% des Volumens der Überzugs-Lösung beträgt.

4. Verfahren nach einem der vorhergehenden Ansprüche, bei dem im Überzug kein Aufschlag vorhanden ist.

5. Verfahren nach einem der vorhergehenden Ansprüche, bei dem die Überzugs-Lösung beim Tauchen des Kerns eine Temperatur zwischen 0 und 10°C hat.

6. Verfahren nach einem der vorhergehenden Ansprüche, wobei das Fett Milchfett oder pflanzliches Fett oder ein Gemisch davon ist.

7. Verfahren nach Anspruch 6, bei dem das pflanzliche Fett Kokosfett oder Kakaofett oder ein Gemisch davon ist.

8. Verfahren nach einem der vorhergehenden Ansprüche, bei dem der Kern zur Kühlung in eine kryogene Flüssigkeit getaucht wird.

9. Verfahren nach Anspruch 8, bei dem die kryogene Flüssigkeit Stickstoff oder Kohlensäure ist.

10. Verfahren nach Anspruch 9, bei dem der Eiskern für eine Zeitspanne von 7 bis 25 Sekunden in flüssigen Stickstoff getaucht wird.

11. Zweikomponenten-Speiseeis, erhältlich durch ein Verfahren nach einem der vorhergehenden Ansprüche, welches einen glatten und cremigen Überzug aufweist.

## Claims

1. Method for the production of a two-component ice cream, in which
the surface of a frozen core of ice cream is brought to a temperature of below at least -15°C,
the surface of the core is dipped into a coating solution for a period of time sufficient to form a quantity of the solution as a layer on the core,
whereafter the whole is again cooled to a surface temperature of below at least -15°C in order to harden the layer on the frozen ice core of ice cream,
characterised in that,
the coating solution has a temperature between 0 and 20°C upon dipping of the core and its fat content is between 10% and 18% and the obtained layer has an aeration between 0 and 30% referred to the volume of the coating solution.

2. Method for the production of a two-component ice cream, in which
the surface of a frozen core of ice cream is brought to a temperature of below at least -40°C,
the surface of the core is dipped into a coating solution for a period of time sufficient to form a quantity of the solution as a layer on the core,
characterised in that,
the coating solution has a temperature between 0 and 20°C upon dipping of the core and its fat content is between 10% and 18% and the obtained layer has an aeration between 0 and 30% referred to the volume of the coating solution,
and the formation of the layer is so effected that the coating layer of the thus obtained ice cream product after the dipping has at least storage temperature or lower.

3. Method according to claim 1 or claim 2, in which the aeration is 0 to 10% of the volume of the coating solution.

4. Method according to any preceding claim, in which no aeration is present in the coating.

5. Method according to any preceding claim, in which the coating solution has a temperature between 0 and 10°C upon dipping of the core.

6. Method according to any preceding claim, wherein the fat is milk fat or vegetable fat or a mixture thereof.

7. Method according to claim 6, in which the vegetable fat is coconut fat or cocoa fat or a mixture thereof.

8. Method according to any preceding claim, in which the core is dipped in a cryogenic liquid, for cooling.

9. Method according to claim 8, in which the cryogenic liquid is nitrogen or carbon dioxide.

10. Method according to claim 9, in which the ice core is dipped in liquid nitrogen for a time period of 7 to 25 seconds.

11. Two-component ice cream, obtainable by means of a method according to any preceding claim, exhibiting a smooth and creamy coating.

## Revendications

1. Procédé de fabrication d'une glace de dégustation à deux composants, dans lequel la surface d'un coeur de glace congelé est amenée à une température inférieure à au moins -15 °C,
la surface du coeur est immergée dans une solution de nappage, pendant un intervalle de temps suffisant pour qu'une quantité de la solution forme une couche sur le coeur,
le tout est ensuite refroidi à nouveau à une température superficielle inférieure à au moins -15 °C, afin de faire durcir la couche sur le coeur de glace congelé,
caractérisé en ce que
la solution de nappage présente une température comprise entre 0 °C et 20 °C au moment de l'immersion du coeur et sa teneur en matière grasse se situe entre 10 % et 18 % et la couche obtenue présente un foisonnement compris entre 0 et 30 %, par rapport au volume de la solution de nappage.

2. Procédé de fabrication d'une glace de dégustation à deux composants, dans lequel la surface d'un coeur de glace congelé est amenée à une température inférieure à au moins -40 °C,
la surface du coeur est immergée dans une solution de nappage, pendant un intervalle de temps suffisant pour qu'une quantité de la solution forme une couche sur le coeur,
caractérisé en ce que la solution de nappage présente une température comprise entre 0 °C et 20 °C au moment de l'immersion du coeur et sa teneur en matière grasse se situe entre 10 % et 18 %, et la couche obtenue présente un foisonnement compris entre 0 et 30 %, par rapport au volume de la solution de nappage,
et la formation de la couche est conduite de manière que la couche de nappage du produit en glace de dégustation ainsi obtenu présente, après immersion, au moins la température de stockage ou une température plus basse.

3. Procédé selon la revendication 1 ou la revendication 2, dans lequel le foisonnement est de 0 à 10 % du volume de la solution de nappage.

4. Procédé selon l'une des revendications précédentes dans lequel le nappage ne présente pas de foisonnement.

5. Procédé selon l'une des revendications précédentes, dans lequel la solution de nappage présente une température comprise entre 0 et 10 °C au moment de l'immersion du coeur.

6. Procédé selon l'une des revendications précédentes, dans lequel la graisse est de la graisse de lait ou de la graisse végétale ou un mélange de celles-ci.

7. Procédé selon la revendication 6, dans lequel la graisse végétale est de la graisse de coco ou de la graisse de cacao ou un mélange de celles-ci.

8. Procédé selon l'une des revendications précédentes dans lequel le coeur est immergé dans un liquide cryogénique pour son refroidissement.

9. Procédé selon la revendication 8, dans lequel le liquide cryogénique est de l'azote ou de l'acide carbonique.

10. Procédé selon la revendication 9 dans lequel le coeur de glace est immergé dans de l'azote liquide pendant un intervalle de temps de 7 à 25 secondes.

11. Glace de dégustation à deux composants obtenue par un procédé selon l'une des revendications précédentes et qui présente un nappage lisse ou crémeux.
